(19) Europäisches Patentamt / European Patent Office / Office européen des brevets

(11) **EP 2 336 604 A1**

(12) **DEMANDE DE BREVET EUROPEEN**

(43) Date de publication:
**22.06.2011 Bulletin 2011/25**

(51) Int Cl.:
*F16H 61/04* (2006.01)    *F16H 61/28* (2006.01)
*F16H 61/688* (2006.01)

(21) Numéro de dépôt: **10193796.9**

(22) Date de dépôt: **06.12.2010**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **17.12.2009  FR 0959085**

(71) Demandeur: **Peugeot Citroën Automobiles SA
78140 Vélizy-Villacoublay (FR)**

(72) Inventeur: **Schaeffer, Eric
75013, PARIS (FR)**

(54)    **Proéedé de pilotage d'un synchroniseur dans une boîte de vitesses**

(57)    Procédé de pilotage d'un synchroniseur pour synchroniser un premier l'arbre primaire (11) dans une boîte de vitesses, initialement synchronisé à une vitesse initiale sur un rapport courant (1) de vitesse, sur un rapport suivant (3) de vitesse en sautant un rapport intermédiaire (2) de vitesse entre le rapport courant (1) et le rapport suivant (3) comprenant :
- une étape de commencement de synchronisation ($t_2$ - $t_3$) dans laquelle on applique sur le synchroniseur un effort suffisant pour amener ledit premier arbre primaire (11) à une vitesse de rotation comprise entre la vitesse initiale et une vitesse finale de synchronisation sur le rapport suivant (3) de vitesse ;
- une étape de relaxation de synchronisation ($t_3$ - $t_4$) dans laquelle on relâche l'effort appliqué sur le synchroniseur ;
- une étape de finalisation ($t_4$ - $t_5$) dans laquelle on ré applique l'effort sur le synchroniseur jusqu'à amener ledit arbre primaire (11) à la vitesse finale de synchronisation.

Fig.2

EP 2 336 604 A1

**Description**

L'invention concerne un procédé de pilotage d'un ou plusieurs synchroniseurs dans une boîte de vitesses de véhicule, notamment de véhicule automobile, lors d'un changement de rapport de vitesse.

Le document FR 2 915 259 décrit déjà un procédé d'optimisation de pilotage des synchroniseurs d'une boîte de vitesses lors d'un changement de rapport de vitesse de façon à respecter la puissance maximale admissible par chaque synchroniseur.

Généralement, dans les boîtes de vitesses, la puissance maximale admissible par un synchroniseur résulte du dimensionnement de ce synchroniseur pour passer d'un rapport de vitesse au rapport suivant immédiatement supérieur ou immédiatement inférieur.

Pour permettre un passage d'un rapport courant de vitesse à un rapport suivant de vitesse en sautant un rapport intermédiaire de vitesse, dans l'état actuel de la technique, il est nécessaire de surdimensionner le synchroniseur de façon à pouvoir absorber une puissance maximale admissible plus élevée qui résulte de l'écart de vitesse alors plus élevé entre le rapport courant et le rapport suivant. Un surdimensionnement présente de nombreux inconvénients, non seulement en coût, mais aussi en encombrement, voire en complexité.

Pour remédier aux inconvénients de l'état antérieur de la technique connue, l'invention a pour objet un procédé de pilotage d'un synchroniseur pour synchroniser un premier arbre primaire dans une boîte de vitesses, initialement embrayé sur un moteur et synchronisé à une vitesse initiale sur un rapport courant de vitesse, sur un rapport suivant de vitesse en sautant un rapport intermédiaire de vitesse entre le rapport courant et le rapport suivant. Le procédé est remarquable en ce qu'il comprend :

- une étape de commencement de synchronisation dans laquelle on applique sur le synchroniseur un effort suffisant pour amener ledit premier arbre primaire à une vitesse de rotation comprise entre la vitesse initiale et une vitesse finale de synchronisation sur le rapport suivant de vitesse ;
- une étape de relaxation de synchronisation dans laquelle on relâche l'effort appliqué sur le synchroniseur ; et
- une étape de finalisation dans laquelle on ré applique l'effort sur le synchroniseur jusqu'à amener ledit arbre primaire à la vitesse finale de synchronisation.

Particulièrement, le procédé comprend une étape d'engagement du rapport intermédiaire de vitesse, exécutée avant ladite étape de commencement, et dans laquelle on amène un deuxième arbre primaire de ladite boîte de vitesses à une vitesse de rotation synchronisée sur ledit rapport intermédiaire.

Plus particulièrement, pour amener ledit deuxième arbre primaire de la boîte de vitesses à une vitesse de rotation synchronisée sur ledit rapport intermédiaire, on débraye le premier arbre primaire du moteur et on embraye simultanément ou successivement le deuxième arbre primaire sur ledit moteur.

De préférence, l'étape de relaxation de synchronisation a une durée qui est paramétrable.

L'invention a aussi pour objet une boîte de vitesses comprenant un synchroniseur pour synchroniser un premier arbre primaire, initialement embrayé sur un moteur et synchronisé à une vitesse initiale sur un rapport courant de vitesse, sur un rapport suivant de vitesse en sautant un rapport intermédiaire de vitesse entre le rapport courant et le rapport suivant, agencé pour :

- appliquer sur le synchroniseur un effort suffisant pour amener ledit premier arbre primaire à une vitesse de rotation comprise entre la vitesse initiale et une vitesse finale de synchronisation sur le rapport suivant de vitesse ;
- relaxer l'effort appliqué sur le synchroniseur ;
- ré appliquer l'effort sur le synchroniseur jusqu'à amener ledit premier arbre primaire à la vitesse finale de synchronisation.

Particulièrement, la boîte de vitesses comprend un deuxième arbre primaire pour engager ledit rapport intermédiaire de vitesse, de manière à amener ledit deuxième arbre primaire à une vitesse de rotation synchronisée sur ledit rapport intermédiaire.

Plus particulièrement, les deux arbres primaires sont embrayables séparément.

De préférence, une durée de relaxation de synchronisation est paramétrable.

L'invention a encore pour objet un véhicule automobile comprenant une boîte de vitesses selon l'invention pour exécuter le procédé selon l'invention.

L'invention sera mieux comprise, et d'autres buts, caractéristiques, détails et avantages de celle-ci apparaîtront plus clairement dans la description explicative qui va suivre faite en référence aux dessins techniques annexés donnés uniquement à titre d'exemple illustrant un mode de réalisation de l'invention et dans lesquels :

- la figure 1 est une vue schématique de boîte de vitesses à double embrayage ;

- la figure 2 est un diagramme temporel qui montre les actions effectuées dans le cadre du procédé conforme à l'invention.

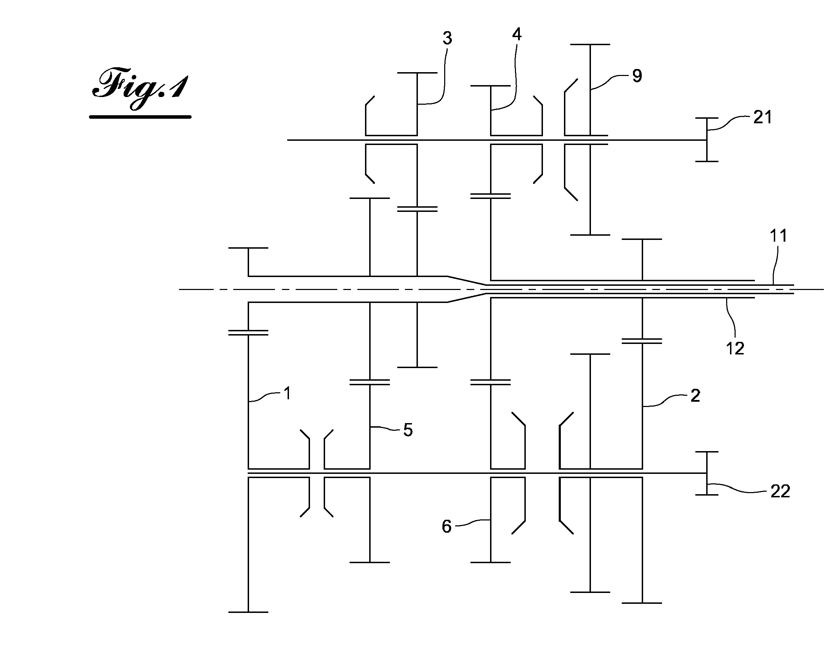

Une boîte de vitesses à double embrayage comme celle représentée sur la figure 1, comprend deux arbres primaires 11, 12. Un premier embrayage (non représenté) est, de manière connue, destiné à connecter le premier arbre primaire 11 au moteur pour engager les rapports de vitesses d'ordre impair. Un deuxième embrayage, lui aussi non représenté parce que connu, est destiné à connecter le deuxième arbre primaire 12 au moteur pour engager les rapports de vitesses d'ordre paire.

Un ou plusieurs arbres secondaires 21, 22 sont solidarisés en rotation avec les roues d'entraînement du véhicule. Sur le ou les arbres secondaires 21, 22 sont montés libres en rotation, des pignons fous 1, 3, 5 correspondant respectivement aux rapports de vitesses d'ordre 1, 3, 5. De même, des pignons fous 2, 4, 6 sont montés libres en rotation sur le ou les arbres secondaires 21, 22, correspondant aux rapports de vitesses d'ordre paire respectivement 2, 4, 6.

Les pignons 1, 3, 5 sont constamment engrainés avec le premier arbre primaire 11 de sorte que lorsque l'arbre primaire 11 tourne à une vitesse $\omega_{11}$, chacun des pignons fous 1, 3, 5 tourne à une vitesse respectivement $\omega_1 = K_1 \omega_{11}$, $\omega_3 = K_3 \omega_{11}$ et $\omega_5 = K_5 \omega_{11}$ où $K_1$, $K_3$, $K_5$, sont respectivement des rapports de démultiplication d'ordre 1, 3, 5.

Les pignons 2, 4, 6 sont constamment engrainés avec le deuxième arbre primaire 12 de sorte que lorsque l'arbre primaire 12 tourne à une vitesse $\omega_{12}$, chacun des pignons fous 2, 4, 6 tourne à une vitesse respectivement $\omega_2 = K_2 \omega_{12}$, $\omega_4 = K_4 \omega_{12}$ et $\omega_6 = K_6 \omega_{12}$ où $K_2$, $K_4$, $K_6$, sont respectivement des rapports de démultiplication d'ordre 2, 4, 6.

Chaque pignon fou 1, 2, 3, 4, 5, 6 peut être synchronisé avec l'arbre secondaire 21 ou 22 au moyen d'un synchroniseur non représenté.

Le principe fondamental de pilotage des boîtes de vitesses à double embrayage réside dans l'agencement des rapports pairs et impairs en deux boîtes de vitesses. On engage un rapport dans la boîte comprenant les rapports pairs en synchronisant avec l'arbre secondaire 21 ou l'arbre secondaire 22, l'un des pignons fous 2, 4, 6 entraînés en rotation par le deuxième arbre primaire 12 qui est embrayé sur le moteur. On présélectionne alors le rapport impair prévu pour un changement de rapport en synchronisant l'un des pignons fous 1, 3, 5 avec l'arbre secondaire 21 ou l'arbre secondaire 22 de sorte que l'arbre primaire 11 des rapports impairs est entraîné en rotation par le pignon fou du rapport présélectionné qui est synchronisé. Réciproquement, on engage un rapport dans la boîte comprenant les rapports impairs en synchronisant avec l'arbre secondaire 21 ou l'arbre secondaire 22, l'un des pignons fous 1, 3, 5 entraîné en rotation par le premier arbre primaire 11 qui est embrayé sur le moteur. On présélectionne alors réciproquement le rapport pair prévu pour un changement de rapport en synchronisant l'un des pignons fous 2, 4, 6 avec l'arbre secondaire 21 ou l'arbre secondaire 22 de sorte que l'arbre primaire 12 des rapports pairs est entraîné en rotation par le pignon fou du rapport présélectionné qui est synchronisé.

Ainsi, lorsqu'un rapport est engagé dans l'une des demi boîtes comprenant les rapports pairs, réciproquement les rapports impairs, l'autre demi boîte de vitesses est déjà engagée sur le rapport impair, réciproquement pair, pressenti pour le changement de rapport. Les stratégies de passage de rapports de ce type de boîte de vitesses reposent généralement sur une interprétation de la volonté du conducteur. Par exemple sur une forte accélération en deuxième, on présélectionnera la boîte de vitesses non embrayée sur le rapport de troisième.

On observe alors un rapport entre la vitesse de rotation de l'arbre non embrayé et la vitesse de rotation de l'arbre embrayé proportionnel au rapport du pignon fou engrainé sur l'arbre primaire embrayé qui est synchronisé sur l'arbre secondaire, et inversement proportionnel au rapport du pignon fou engrainé sur l'arbre primaire non embrayé qui est synchronisé sur l'arbre secondaire.

Lors d'un changement de rapport dans une architecture de type double embrayage, les synchroniseurs sont remarquablement plus sollicités que dans une boîte de vitesses à architecture classique basée sur un embrayage unique. En effet, dans une boîte classique à embrayage unique, les synchroniseurs sont sollicités pour un passage du rapport de vitesse au rapport de vitesse immédiatement supérieur ou immédiatement inférieur. Par contre, lors d'une succession de passages de rapports dans une boîte de vitesses à double embrayage, la décomposition de la boite de vitesses en deux demi boites, entraîne des sauts de rapports 1→3, 2→5 lors de la présélection du rapport sur la demi boite non embrayée. Les synchroniseurs d'une boîte de vitesses à double embrayage sont alors sollicités en sauts de rapports pour passer d'un rapport pair précédent au rapport pair suivant ou d'un rapport impair précédent au rapport impair suivant. Par exemple, pour faire un passage de deuxième en troisième alors que l'arbre primaire 11 était précédemment synchronisé sur le pignon fou de première vitesse, le saut de démultiplication de vitesses est considérable lors de la synchronisation de l'arbre primaire 11 sur l'arbre secondaire 21 par le synchroniseur du pignon fou de troisième. Cette contrainte conduit à un dimensionnement de forte valeur du diamètre du synchroniseur et aussi à une multiplication des cônes de frottement qui se répercute sur les efforts de trainée et par conséquent sur la consommation.

Ainsi par exemple, lorsque le véhicule roule en deuxième engagée, la demi-boite des rapports impairs liée à l'arbre primaire 11, doit effectuer un passage de première en troisième. Si le passage de rapport de première en troisième est effectué tardivement, il y a un risque au niveau de l'énergie à dissiper dans le synchroniseur de troisième. En effet, lors d'un passage de rapports ascendants, le moteur et par conséquent l'arbre primaire 12 embrayé, accélère généralement constamment. L'écart de régime au synchroniseur sera alors élevé.

Par exemple à 6000tr/min moteur en deuxième engagée, l'arbre primaire 11 entraîné par le pignon de première qui est solidaire de l'arbre secondaire, peut tourner à 10000tr/min.

A titre purement illustratif et non limitatif, prenons un exemple de boîte de vitesses dans laquelle $K_1$=0,2857, $K_2$= 0,4792 et $K_3$=0,7447. Lorsque le rapport de deuxième est engagé, l'arbre secondaire 22 est synchronisé sur le pignon 2 qui est engrainé sur l'arbre primaire 12 embrayé sur le moteur. La vitesse $\omega_{22}$ de l'arbre secondaire 22 est alors donnée par la formule :

$$\omega_{22}=\omega_{12} \text{ x } K_2 = 2872\text{tr/min.}$$

En supposant que les deux arbres secondaires 21 et 22 ont la même démultiplication et que le rapport de première reste engagé alors que l'arbre primaire 11 est débrayé, le synchroniseur du pignon 3 doit absorber un écart de vitesse donné sur l'arbre primaire 11 par la formule :

$$\varpi_{11} = \frac{\varpi_{22} x K_3}{K_1} = \frac{2872 \, x \, 0,7447}{0,2857} = 7586 tr / mn$$

Comme nous allons l'expliquer à présent, le procédé conforme à l'invention a pour objet une utilisation du synchroniseur du rapport présélectionné dès la fin du passage du rapport en cours, de façon à effectuer une première partie de la phase de synchronisation, puis de relâcher ledit synchroniseur durant un temps calibrable afin de garantir son refroidissement et sa lubrification. On sollicite ensuite une nouvelle fois le synchroniseur du rapport présélectionné avant de le craboter. A titre purement illustratif et non limitatif, on peut donner une valeur indicative du temps calibrable de l'ordre de 50ms.

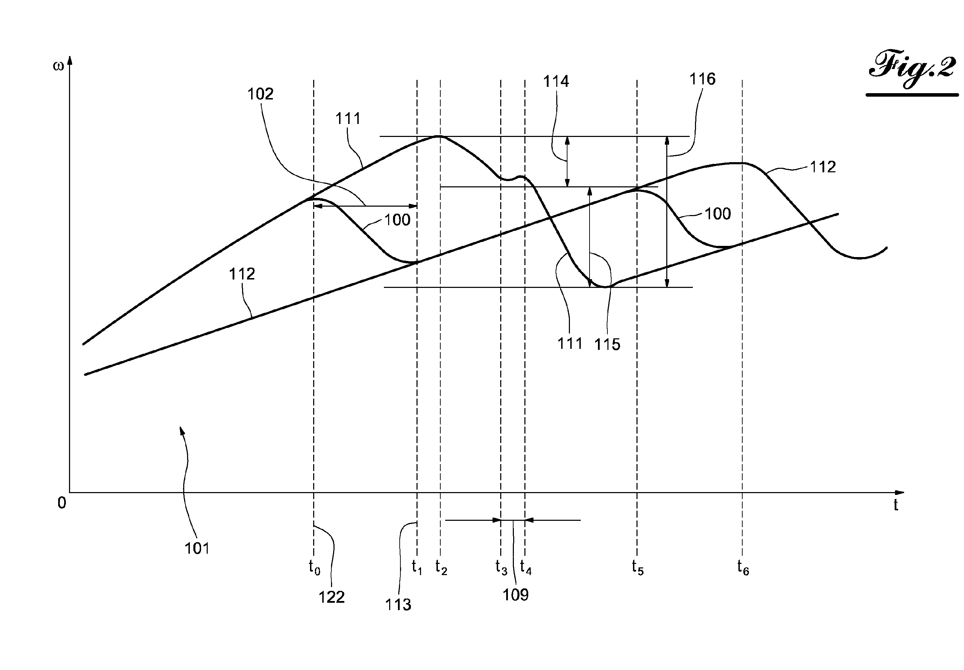

La figure 2 illustre une application du procédé à un engagement du rapport d'ordre 2 à la suite d'un engagement précédent du rapport d'ordre 1 et pour lequel on présélectionne le rapport d'ordre 3. Les passages ascendant ou descendant d'autres rapports de vitesses sont traités de façon semblable.

Les courbes 100, 111, 112 donnent la vitesse de rotation $\omega$ en fonction du temps t de respectivement le moteur, l'arbre primaire 11 des rapports impairs et l'arbre primaire 12 des rapports pairs. Dans la partie 101 de l'espace plan qui précède l'instant $t_0$, le rapport de première est engagé de sorte que la courbe 100 de vitesse du moteur est superposée à la courbe 111 de vitesse de rotation de l'arbre primaire 11 qui est embrayé avec le moteur. L'arbre primaire 12 qui est débrayé du moteur tourne alors à une vitesse de rotation :

$$\varpi_{12}=\varpi_{11} x \frac{K_1}{K_2}$$

C'est pourquoi on note à gauche de l'instant $t_0$, une proportionnalité de la courbe 112 inférieure à la courbe 111.

Le trait vertical 122 marque le début d'une phase 102 de passage du rapport de première en deuxième par croisement des embrayages qui se termine à un instant $t_1$ limité par le trait vertical pointillé 113. A l'intersection du trait vertical 122 avec la courbe 111, l'arbre primaire 11 des rapports de vitesses impaires est encore totalement embrayé sur le moteur. L'arbre primaire 12 des rapports de vitesses paires, est encore totalement débrayé du moteur. A partir de l'instant $t_0$, l'arbre primaire 11 est progressivement débrayé jusqu'à être totalement débrayé à l'instant $t_1$. Inversement, l'arbre primaire 12 est progressivement embrayé jusqu'à être totalement embrayé à l'instant $t_1$. Pendant la phase 102 de passage du rapport de première au rapport de deuxième, les deux embrayages patinent de sorte à amener la vitesse de rotation du moteur progressivement de celle qu'elle avait à l'instant $t_0$ confondue avec celle de l'arbre primaire 11 à celle qu'elle a atteint à l'instant $t_1$ pour se confondre avec la vitesse de l'arbre de rotation primaire 12.

A partir de l'instant $t_1$, la vitesse de rotation du moteur est égale à la vitesse de rotation de l'arbre 12. Les courbes 100 et 112 sont confondues. La courbe 111 continue quand à elle jusqu'à un instant $t_2$ à respecter le coefficient de proportionnalité entre les vitesses de l'arbre primaire 11 et de l'arbre primaire 12. A l'instant $t_2$ on commande une présélection du rapport de troisième. A la fin de la phase de présélection à un instant $t_5$, la vitesse de rotation $\omega_{11}$, de l'arbre primaire 11 vérifiera la relation :

$$\varpi_{11} = \frac{\varpi 12 x K_2}{K_3}.$$

Pendant la phase de présélection qui s'étend de l'instant $t_2$ à l'instant $t_5$, il est alors nécessaire de synchroniser le pignon 3 sur l'arbre secondaire 21 de façon à amener l'arbre primaire 11 à la vitesse de rotation correspondant au rapport de troisième. On note alors une baisse de vitesse 116 entre un maximum de la courbe 111 à l'instant $t_2$ et un minimum lorsque la courbe 111 se calle sur le rapport de vitesse de troisième. L'écart 116 de régime à l'arbre primaire est d'autant plus important que la présélection se fait tardivement après le passage de première en deuxième dans le cas d'une accélération du véhicule.

En l'absence de l'invention, il est nécessaire de dimensionner le synchroniseur de façon à absorber des différences d'énergie cinétique généralement dissipée sous forme de chaleur.

Dans le procédé selon l'invention, l'application du synchroniseur se fait en deux parties. Dans une première partie allant de l'instant $t_2$ à un instant $t_3$ inférieur à l'instant $t_5$, l'application du synchroniseur provoque une première diminution 114 de l'écart de régime 116.

Comme nous l'avons vu plus haut dans le texte, l'arbre primaire 11 dans la boîte de vitesses, est embrayé jusqu'à l'instant $t_0$ sur le moteur étant synchronisé à une vitesse initiale de rotation sur le rapport 1 courant de vitesse. De façon à présélectionner le rapport suivant 3 de vitesse dans le cas de passage montant de vitesse illustré par la figure 2, il est intéressant de synchroniser l'arbre primaire 11 sur le rapport 3 pendant que l'arbre primaire 12 sur lequel on a engagé le rapport intermédiaire 2 de vitesse entre le rapport courant 1 et le rapport suivant 3, et amené à une vitesse de rotation synchronisée sur le rapport intermédiaire 2.

Pendant l'étape d'engagement qui dure de l'instant $t_0$ à l'instant $t_1$, on a débrayé l'arbre primaire 11 et on a embrayé simultanément l'arbre primaire 12.

Dans une étape comprise entre les instants $t_2$ et $t_3$, un commencement de synchronisation consiste à appliquer sur le synchroniseur un effort suffisant pour amener l'arbre primaire 11 à une vitesse de rotation comprise entre la vitesse qu'il aurait en restant synchronisé sur le rapport courant 1 tel qu'on le voit à gauche de l'instant $t_2$ et une vitesse finale de synchronisation sur le rapport suivant 3 de vitesse que l'on note à droite de l'instant $t_5$. On obtient ainsi une diminution de vitesse 114 nettement inférieure à la diminution de vitesse 116 qui fait moins travailler le synchroniseur. Les pertes plus faibles qui en résultent ont pour effet de moins faire chauffer le synchroniseur.

Dans une étape de relaxation de synchronisation comprise entre les instants $t_3$ et $t_4$, on relâche l'effort appliqué sur le synchroniseur de façon à l'arrêter momentanément de travailler. La durée $t_4 - t_3$ de l'étape de relaxation est paramétrable de façon à pouvoir l'ajuster pendant des campagnes de testes et de mesures jusqu'à obtenir un refroidissement suffisant du synchroniseur pour passer aux étapes suivantes. Typiquement, une durée de 50ms permet de garantir un bon refroidissement et une bonne lubrification du synchroniseur. Dans une étape de finalisation comprise entre les instants $t_4$ et $t_5$, on réaugmente l'effort appliqué sur le synchroniseur jusqu'à amener l'arbre primaire 11 à la vitesse finale de synchronisation qui suit bien entendu l'évolution de vitesse des arbres secondaires. On note que pendant les durées $t_2$ à $t_3$, $t_3$ à $t_4$ et $t_4$ à $t_5$, pour exécuter l'étape de commencement de synchronisation, l'étape de relaxation et l'étape de finalisation de synchronisation, la vitesse a évolué de sorte que l'écart de vitesse 116 égal à la somme de l'écart de vitesse 114 pendant l'étape de commencement de synchronisation et de l'écart de vitesse 115 pendant l'étape de finalisation, est a priori plus faible que l'écart de vitesse qui résulterait d'une synchronisation complète immédiate.

## Revendications

**1.** Procédé de pilotage d'un synchroniseur pour synchroniser un premier arbre primaire (11) dans une boîte de vitesses, initialement synchronisé à une vitesse initiale sur un rapport courant (1) de vitesse, sur un rapport suivant (3) de vitesse en sautant un rapport intermédiaire (2) de vitesse entre le rapport courant (1) et le rapport suivant (3), comprenant :

- une étape de commencement de synchronisation ($t_2 - t_3$) dans laquelle on applique sur le synchroniseur un effort suffisant pour amener ledit premier arbre primaire (11) à une vitesse de rotation comprise entre la vitesse initiale et une vitesse finale de synchronisation sur le rapport suivant (3) de vitesse ;
- une étape de relaxation de synchronisation ($t_3 - t_4$) dans laquelle on relâche l'effort appliqué sur le synchroniseur ;
- une étape de finalisation ($t_4 - t_5$) dans laquelle on ré applique l'effort sur le synchroniseur jusqu'à amener ledit arbre primaire (11) à la vitesse finale de synchronisation.

**2.** Procédé selon la revendication 1, **caractérisé en ce qu'**il comprend :

- une étape d'engagement ($t_0$ - $t_1$) du rapport intermédiaire (2) de vitesse, exécutée avant ladite étape de commencement, et dans laquelle on amène un deuxième arbre primaire (12) de ladite boîte de vitesses à une vitesse de rotation synchronisée sur ledit rapport intermédiaire (2).

**3.** Procédé selon la revendication 2, **caractérisé en ce que**, pour amener ledit deuxième arbre primaire (12) de la boîte de vitesses à une vitesse de rotation synchronisée sur ledit rapport intermédiaire (2), on débraye le premier arbre primaire (11) du moteur et on embraye simultanément ou successivement le deuxième arbre primaire (12) sur ledit moteur.

**4.** Procédé selon l'une des revendications précédentes, **caractérisé en ce qu'**une durée de l'étape de relaxation de synchronisation ($t_3$ - $t_4$) est paramétrable.

**5.** Boîte de vitesses comprenant un synchroniseur pour synchroniser un premier arbre primaire (11), initialement synchronisé à une vitesse initiale sur un rapport courant (1) de vitesse, sur un rapport suivant (3) de vitesse en sautant un rapport intermédiaire (2) de vitesse entre le rapport courant (1) et le rapport suivant (3), agencé pour :

- appliquer sur le synchroniseur un effort suffisant pour amener ledit premier arbre primaire (11) à une vitesse de rotation comprise entre la vitesse initiale et une vitesse finale de synchronisation sur le rapport suivant (3) de vitesse ;
- relaxer l'effort appliqué sur le synchroniseur ;
- ré appliquer l'effort sur le synchroniseur jusqu'à amener ledit premier arbre primaire (11) à la vitesse finale de synchronisation.

**6.** Boîte de vitesses selon la revendication 5, **caractérisée en ce qu'**elle comprend un deuxième arbre primaire (12) pour engager ledit rapport intermédiaire (2) de vitesse, de manière à amener ledit deuxième arbre primaire (12) à une vitesse de rotation synchronisée sur ledit rapport intermédiaire (2).

**7.** Boîte de vitesses selon la revendication 6, **caractérisée en ce que** les deux arbres primaires (11, 12) sont embrayables séparément.

**8.** Boîte de vitesses selon l'une des revendications 5 à 7, **caractérisée en ce qu'**une durée de relaxation de synchronisation ($t_3$ - $t_4$) est paramétrable.

**9.** Véhicule automobile comprenant une boîte de vitesses selon l'une des revendications 5 à 8 pour exécuter le procédé selon l'une des revendications 1 à 4.

Fig.1

*Fig.2*

EP 2 336 604 A1

Europäisches
Patentamt

European
Patent Office

Office européen
des brevets

# RAPPORT DE RECHERCHE EUROPEENNE

Numéro de la demande

EP 10 19 3796

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | DE 199 39 819 C1 (DAIMLER CHRYSLER AG [DE]) 23 novembre 2000 (2000-11-23) * colonne 1, ligne 5 - colonne 2, ligne 41 * | 1-9 | INV. F16H61/04 F16H61/28 F16H61/688 |
| | ----- | | |
| A | DE 197 51 456 A1 (VOLKSWAGEN AG [DE]) 27 mai 1999 (1999-05-27) * colonne 2, ligne 19-58; figures 3,4 * | 1-9 | |
| | ----- | | |
| A | DE 102 53 616 A1 (VOLKSWAGEN AG [DE]) 27 mai 2004 (2004-05-27) * abrégé * | 1-9 | |
| | ----- | | |
| A | EP 1 983 226 A1 (PEUGEOT CITROEN AUTOMOBILES SA [FR]) 22 octobre 2008 (2008-10-22) * alinéas [0020] - [0024]; figures 2-4 * ----- | 1-9 | |

**DOMAINES TECHNIQUES RECHERCHES (IPC)**

F16H

Le présent rapport a été établi pour toutes les revendications

| Lieu de la recherche | Date d'achèvement de la recherche | Examinateur |
|---|---|---|
| Munich | 25 janvier 2011 | Daïeff, Bertrand |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 19 3796

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-01-2011

| Document brevet cité au rapport de recherche | | Date de publication | Membre(s) de la famille de brevet(s) | | Date de publication |
|---|---|---|---|---|---|
| DE 19939819 | C1 | 23-11-2000 | AUCUN | | |
| DE 19751456 | A1 | 27-05-1999 | AUCUN | | |
| DE 10253616 | A1 | 27-05-2004 | AUCUN | | |
| EP 1983226 | A1 | 22-10-2008 | FR | 2915260 A1 | 24-10-2008 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- FR 2915259